# EUROPÄISCHE PATENTSCHRIFT

(11) **EP 0 709 472 B1**
(45) Veröffentlichungstag und Bekanntmachung des Hinweises auf die Patenterteilung: **30.06.1999**
(21) Anmeldenummer: 95113465.9
(22) Anmeldetag: 28.08.1995
(51) Int. Cl.: C22B 7/02, C22B 19/38

(54) **Verfahren zum Aufarbeiten von metallhaltigem Schlamm**
Method for processing metalliferous sludge
Procédé de traitement de boues métallifères

(30) Priorität: 15.10.1994 DE 4436918
(43) Veröffentlichungstag der Anmeldung: 01.05.1996
(73) Patentinhaber: Metallgesellschaft Aktiengesellschaft, 60325 Frankfurt am Main (DE)
(72) Erfinder: Lausch, Herbert, D-61381 Friedrichsdorf (DE); Lommert, Hermann, D-63263 Neu-Isenburg 2 (DE)

(56) Entgegenhaltungen:
- EP-A- 0 614 710
- DE-A- 2 936 143
- DE-A- 4 308 549
- ERZMETALL, Bd. 5, Nr. 45, Seiten 253-259, XP 000267963 HEIN K ET AL 'ZINKGEWINNUNG IN DEN NEUEN BUNDESLAENDERN'

## Beschreibung

Die vorliegende Erfindung betrifft ein Verfahren zum Aufarbeiten von metallhaltigem Schlamm unter Verwendung eines Drehofens.

Aus "Zinkgewinnung in den neuen Bundesländern", Erzmetall 45 (1992) Nr. 5, Seiten 253 - 259, ist es bekannt, Laugungsrückstände in einem Wälzofen aufzuarbeiten. Die bekannten Verfahren sind aus umweltrechtlichen und wirtschaftlichen Gründen verbesserungsfähig. Bei dem Entwurf und der Konzeption für eine Wälzanlage, und für die Durchführung eines Wälzverfahrens, insbesondere für Laugungsrückstände, müssen immer strengere umweltrechtliche Auflagen beachtet werden. Im internationalen Vergleich haben ebenso wirtschaftliche Gesichtspunkte für das Betreiben einer Wälzanlage einen hohen Stellenwert.

Die Aufgabe der vorliegenden Erfindung liegt darin, ein umweltschonendes und wirtschaftliches Verfahren zum Aufarbeiten von metallhaltigen Schlämmen bereitzustellen.

Die der Erfindung zugrundeliegende Aufgabe wird dadurch gelöst, daß
a) der Schlamm vor getrocknet wird und das Abgas vom Feststoff abgetrennt und abgeführt wird,
b) der gemäß Verfahrensstufe (a) getrocknete Schlamm im Drehofen gewälzt wird, die beim Wälzen gebildete Wälzschlacke ausgetragen und das feststoffhaltige Abgas abgeführt wird,
c) grobkörniger Feststoff aus dem Abgas gemäß Verfahrensstufe (b) abgetrennt und in die Schlammtrocknung gemäß Verfahrensstufe (a) eingeleitet wird und ein Teil des von grobkörnigem Feststoff abgetrennten Abgases in die Schlammtrocknung gemäß Verfahrensstufe (a) eingeleitet wird,
d) das restliche Abgas gemäß Verfahrensstufe (c) von feinem Feststoff abgetrennt und abgeführt wird und der feine Feststoff als Produkt gewonnen wird,
e) der gemäß Verfahrensstufe (a) abgetrennte Feststoff in die Schlammtrocknung gemäß Verfahrensstufe (a) eingeleitet wird.

Bei dem für das erfindungsgemäße Verfahren verwendeten metallhaltigen Schlamm kann es sich u.a. um einen Schlamm aus der Metalllaugung, insbesondere um einen Schlamm aus der Zinklaugung, handeln. Dieser Schlamm liegt gewöhnlich mit einem Feststoff mit einer Korngröße von etwa <0,1 mm vor. Der Schlamm hat einen Wassergehalt von über 30 Gew.-%. Der Schlamm wird zur Schlammtrocknung in einen Schlammtrockner eingeleitet. Als Schlammtrockner kann ein Trommeltrockner, Sprühtrockner oder anderer bekannter Trocknungsreaktor verwendet werden. Im Schlammtrockner erfolgt eine Reduzierung des Wassergehaltes von anfangs über 30 Gew.-% auf unter 20 Gew.-%. Nach dem Verfahren der vorliegenden Erfindung erfolgt im Schlammtrockner eine Agglomeration des getrockneten Laugungsrückstandes auf eine Korngröße von bis zu etwa 30 mm. Der agglomerierte Feststoff wird in einen Wälzofen überführt. Als Wälzofen wird ein an sich bekannter Drehrohrofen verwendet. Der agglomerierte Rückstand wird im Drehrohrofen zu Wälzschlacke und Wälzoxid umgesetzt. Die Wälzschlacke beträgt etwa 60 Gew.-% des eingesetzten Rückstandes. Aus dem Wälzofen wird feststoffhaltiges Abgas abgeführt. Der Feststoff besteht aus feinkörnigem Wälzoxid und grobkörnigem sogenannten Voroxid. Die Menge des Voroxids beträgt bis zu etwa 30 Gew.-% des aus dem Wälzofen mit dem Abgas ausgetragenen Feststoffes und etwa bis zu 10 Gew.-% des in den Wälzofen eingetragenen agglomerierten Materials. Die Abtrennung des Voroxids erfolgt in einer an sich bekannten Staubkammer. Mit dem Abgas kann auch in kleinen Mengen Ofenrücklauf aus dem Wälzofen ausgetragen werden, der erfindungsgemäß mit dem grobkörnigen Feststoff in den Schlammtrockner rückgeführt wird.

Die Vorteile der vorliegenden Erfindung liegen gegenüber den aus dem Stand der Technik bekannten Verfahren darin, daß das Voroxid und gegebenenfalls der Ofenrücklauf in den Schlammtrockner zurückgeführt werden. Ein weiterer Vorteil liegt darin, daß ein Teil des Abgases in den Schlammtrockner zurückgeleitet wird. Der Schlammtrockner, in dem die Vortrocknung erfolgt, wird daher nicht extern geheizt, sondern erfindungsgemäß ausschließlich durch die fühlbare Wärme des zurückgeleiteten Feststoffes und des zurückgeleiteten Teiles des Abgases auf der Betriebstemperatur gehalten. Ein weiterer Vorteil liegt darin, daß durch die mit dem Abgas in den Schlammtrockner eingeleiteten Stäube eine Verbesserung der Agglomerierung des Laugungsrückstandes bewirkt wird. Schließlich liegt ein Vorteil darin, daß der Feststoff, der aus dem Abgas aus dem Schlammtrockner abgeführt wird, in den Schlammtrockner zurückgeleitet wird. Der Filterrückstand bewirkt ebenso wie das eingeleitete Wälzoxid eine bessere Agglomerierung des Laugungsrückstandes, da es sich bei den rückgeführten Feststoffen um trockenes Material handelt und somit der Wassergehalt des Laugungsrückstandes verteilt wird.

Die vorstehend beschriebenen Vorteile der vorliegenden Erfindung bewirken die Ersparnis für eine externe Heizung des Vortrockners und damit eine Wärmeersparnis für die Vortrocknung. Der Wärmeverbrauch der Vortrocknung liegt bei etwa 15 % des Gesamtverfahrens. Die Wälzoxidqualität wird durch die Rezirkulierung und Einbindung eines Teils der Oxidmenge in das Trockengut verbessert.

Eine vorzugsweise Ausgestaltung der Erfindung ist ein Verfahren, wobei der Schlamm gemäß Verfahrensstufe (a) bei einer Gastemperatur von 500 bis 800°C getrocknet wird. Bei diesen Temperaturen erfolgt die größte Verringerung des Wassergehalts im Schlamm, und es werden die besten Ergebnisse bei der Agglomerierung erreicht.

Eine vorteilhafte Ausgestaltung der Erfindung ist ein Verfahren, wobei beim Wälzen gemäß Verfahrensstufe (b) eine Temperatur von 1000 bis 1200°C eingestellt wird. Bei diesen Temperaturen werden sehr gute Ergebnisse für die Menge des erzeugten Wälzoxids erhalten. Die Verweilzeit für das Material im Wälzofen liegt bei über 5 Stunden.

Eine vorteilhafte Ausgestaltung der Erfindung ist ein Verfahren, wobei gemäß Verfahrensstufe (c) ein grobkörniger Feststoff mit einer Korngröße <30 mm abgeschieden wird. Das Voroxid hat eine Korngröße von <30 mm. Eine geringe Menge des Wälzoxids, dessen mittlere Korngröße bei etwa 0,005 mm liegt, bleibt am Grobkorn, daher am Voroxid, haften. Diese geringe Menge des Wälzoxids wird in der Staubkammer nicht mit dem Abgas mitgerissen. Es wird aber mit dem Voroxid in den Schlammtrockner zurückgeführt und bleibt daher im Verfahren.

Eine vorzugsweise Ausgestaltung der Erfindung ist ein Verfahren, wobei die Menge des gemäß Verfahrensstufe (c) in die Schlammtrocknung eingeleiteten Abgases so eingestellt wird, daß der gemäß Verfahrensstufe (a) getrocknete Schlamm einen Wassergehalt von 10 bis 20 Gew.-% aufweist. Die wichtigste Funktion der Schlammtrocknung liegt darin, den Wassergehalt im Schlamm von anfangs über 30 Gew.-% auf unter 20 Gew.-% zu verringern. Die Temperatur des Schlammtrockners muß daher auf diesen Wassergehalt für den in den Wälzofen einzuführenden Schlamm eingestellt werden. Um diese Temperatur im Schlammtrockner zu gewährleisten, muß das gesamte Voroxid und ein Teil des wälzoxidhaltigen Abgases in den Schlammtrockner eingeleitet werden. Die Menge des in den Schlammtrockner eingeleiteten wälzoxidhaltigen Abgases richtet sich einmal nach der im Schlammtrockner geforderten Temperatur und zum anderen nach der Temperatur des Abgases, die wiederum durch die Heiztemperatur im Wälzofen vorgegeben wird.

Eine vorteilhafte Ausgestaltung der Erfindung ist ein Verfahren, wobei gemäß Verfahrensstufe (e) ein Feststoff mit einer Korngröße <1 mm und einer Temperatur von 100 bis 200°C abgetrennt wird. Mit diesem Filterfeststoff werden sehr gute Ergebnisse bei der Agglomerierung des Schlamms erzielt. Die erhöhte Temperatur des Filterrückstandes ermöglicht es, daß die Menge des aus der Staubkammer rückgeführten wälzoxidhaltigen Abgases vorteilhafterweise niedriger gehalten werden kann.

Die Erfindung wird anhand einer Zeichnung und eines Beispiels weiter erläutert.

### Zeichnung:

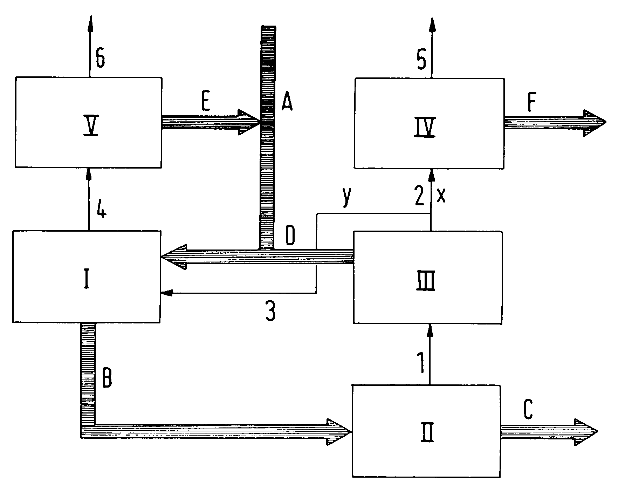

Die Zeichnung beinhaltet eine Figur, die ein Fließschema des erfindungsgemäßen Verfahrens darstellt. Über die Leitung (A) wird der Laugungsrückstand in den Schlammtrockner (I) eingeleitet. Der vorgetrocknete und granulierte Schlamm wird über die Leitung (B) in den Dreh- bzw. Wälzofen (II) eingeleitet. Aus dem Wälzofen (II) wird Wälzschlacke über die Leitung (C) abgeführt. Aus dem Wälzofen (II) wird über die Leitung (1) feststoffhaltiges Abgas in die Staubkammer (III) eingeleitet. Aus der Staubkammer (III) wird grobkörniges Material, also das Voroxid, über die Leitung (D) abgeführt. Die Leitung (D) geht in die Leitung (A) über und führt in den Schlammtrockner (I). Aus der Staubkammer (III) wird über die Leitung (2) wälzoxidhaltiges Abgas abgeführt. Von der Leitung (2) wird die Leitung (3) abgezweigt, über die ein Teil des wälzoxidhaltigen Abgases (y) in den Schlammtrockner (I) eingeleitet wird. Das restliche wälzoxidhaltige Abgas (x) wird über die Leitung (2) in das Abgassystem (IV) eingeleitet. Im Abgassystem (IV) wird das Wälzoxid vom Abgas abgetrennt und über die Leitung (F) abgeführt. Das Abgas wird aus dem Abgassystem über die Leitung (5) abgeführt. Das Abgas aus dem Schlammtrockner (I) wird über die Leitung (4) in den Abgasfilter (V) eingeleitet. Der im Abgasfilter (V) abgetrennte Feststoff wird über die Leitung (E) abgeführt. Die Leitung (E) geht in die Leitung (A) über. Der Feststoff wird somit über die Leitungen (E) und (A) in den Schlammtrockner (I) zurückgeführt. Das Abgas aus dem Abgasfilter (V) wird über die Leitung (6) abgeführt.

### Beispiel:

Eine vorteilhafte Ausführungsform des erfindungsgemäßen Verfahrens wird nachstehend im Zusammenhang mit dem vorstehend beschriebenen Fließschema in tabellarischer Form aufgeführt:

| Gas | | Ofenabgas | Teilgas X | Teilgas Y | Trocknerabgas |
|---|---|---|---|---|---|
| Nr. | | 1 | 2 | 3 | 4 |
| Volumen | Nm³/h | 45.000 | 30.000 | 15.000 | 20.000 |
| Temperatur | °C | 700 | 700 | 700 | 160 |
| Staubbeladung | g/Nm³ | 150 | 150 | 150 | 20 |
| | | | | | |

| Feststoff | | NLR¹⁾Schlamm | Filterstaub | Voroxid | Getrockneter Schlamm²⁾ |
|---|---|---|---|---|---|
| Nr. | | A | E | D | B |
| Menge | t/h | 16,9 | 0,4 | 1,4 | 17,2 |
| Temperatur | °C | 20 | 100 | 250 | 90 |
| Feuchte | % | 35 | 0 | 0 | 15 |

| | | | | | |
|---|---|---|---|---|---|
| ¹⁾ Neutrallaugungsrückstand | | | | | |
| ²⁾ agglomeriert als Granalien | | | | | |

## Patentansprüche

1. Verfahren zum Aufarbeiten von metallhaltigem Schlamm unter Verwendung eines Drehofens, wobei
a) der Schlamm vor getrocknet wird und das Abgas vom Feststoff abgetrennt und abgeführt wird,
b) der gemäß Verfahrensstufe (a) getrocknete Schlamm im Drehofen gewälzt wird, die beim Wälzen gebildete Wälzschlacke ausgetragen und das feststoffhaltige Abgas abgeführt wird,
c) grobkörniger Feststoff aus dem Abgas gemäß Verfahrensstufe (b) abgetrennt und in die Schlammtrocknung gemäß Verfahrensstufe (a) eingeleitet wird und ein Teil des von grobkörnigem Feststoff abgetrennten Abgases in die Schlammtrocknung gemäß Verfahrensstufe (a) eingeleitet wird,
d) das restliche Abgas gemäß Verfahrensstufe (c) von feinem Feststoff abgetrennt und abgeführt wird und der feine Feststoff als Produkt gewonnen wird,
e) der gemäß Verfahrensstufe (a) abgetrennte Feststoff in die Schlammtrocknung gemäß Verfahrensstufe (a) eingeleitet wird.

2. Verfahren nach Anspruch 1, wobei der Schlamm gemäß Verfahrensstufe (a) bei einer Gastemperatur von 500 bis 800°C getrocknet wird.

3. Verfahren nach den Ansprüchen 1 oder 2, wobei beim Wälzen gemäß Verfahrensstufe (b) eine Temperatur von 1000 bis 1200°C eingestellt wird.

4. Verfahren nach den Ansprüchen 1 bis 3, wobei gemäß Verfahrensstufe (c) ein grobkörniger Feststoff mit einer Korngröße <30 mm abgeschieden wird.

5. Verfahren nach den Ansprüchen 1 bis 4, wobei die Menge des gemäß Verfahrensstufe (c) in die Schlammtrocknung eingeleiteten Abgases so eingestellt wird, daß der gemäß Verfahrensstufe (a) getrocknete Schlamm einen Wassergehalt von 10 bis 20 Gew.-% aufweist.

6. Verfahren nach den Ansprüchen 1 bis 5, wobei gemäß Verfahrensstufe (e) ein Feststoff mit einer Korngröße <1 mm und einer Temperatur von 100 bis 200°C abgetrennt wird.

## Claims

1. Process of processing metal-containing sludge by using a rotary kiln, wherein
a) the sludge is predried, and the exhaust gas is separated from the solid matter and discharged,
b) the sludge dried in accordance with process stage (a) is rolled in the rotary kiln, the rolling slag formed upon rolling is discharged, and the solids-containing exhaust gas is withdrawn,
c) coarse-grained solid matter is separated from the exhaust gas in accordance with process stage (b) and introduced into the sludge drying in accordance with process stage (a), and part of the exhaust gas separated from the coarse-grained solid matter is introduced into the sludge drying in accordance with process stage (a),
d) the remaining exhaust gas is separated from fine solid matter in accordance with process stage (c) and discharged, and the fine solid matter is recovered as product,
e) the solid matter separated in accordance with process stage (a) is introduced into the sludge drying in accordance with process stage (a).

2. The process as claimed in claim 1, wherein the sludge is dried in accordance with process stage (a) at a gas temperature of 500 to 800°C.

3. The process as claimed in claims 1 or 2, wherein for rolling in accordance with process stage (b) there is set a temperature of 1000 to 1200°C.

4. The process as claimed in claims 1 to 3, wherein in accordance with process stage (c) there is separated a coarse-grained solid matter having a grain size < 30 mm.

5. The process as claimed in claims 1 to 4, wherein the amount of the exhaust gas introduced into the sludge drying in accordance with process stage (c) is adjusted such that the sludge dried in accordance with process stage (a) has a water content of 10 to 20 wt-%.

6. The process as claimed in claims 1 to 5, wherein in accordance with process stage (e) there is separated a solid matter having a grain size < 1 mm and a temperature of 100 to 200°C.

## Revendications

1. Procédé de traitement de boues métallifères en utilisant un four tournant, qui consiste
a) à présécher la boue et à séparer le gaz qui s'échappe de la matière solide et à l'évacuer,
b) à faire passer au four tubulaire la boue séchée suivant le stade a) du procédé, à décharger les scories formées lors du passage au four tubulaire et à évacuer le gaz d'échappement contenant de la matière solide,
c) à séparer la matière solide à gros grains du gaz qui s'échappe suivant le stade b) du procédé et à l'envoyer au séchage de la boue suivant le stade a) du procédé et à envoyer une partie du gaz qui s'échappe et qui est séparé de la matière solide à gros grain au séchage de la boue suivant le stade a) du procédé,
d) à séparer et à évacuer le gaz restant qui s'échappe suivant le stade c) du procédé de la matière solide et à recueillir comme produit la matière fine,
e) à envoyer la matière solide séparée au stade a) du procédé au séchage de la boue suivant le stade a) du procédé,

2. Procédé suivant la revendication 1, dans lequel la boue est séchée, suivant le stade a) du procédé, à une température des gaz de 500 à 800°C.

3. Procédé suivant la revendication 1 ou 2, dans lequel on établit lors du passage au four tournant, suivant le stade b) du procédé, une température de 1000 à 1200°C.

4. Procédé suivant l'une des revendications 1 à 3, dans lequel on sépare, suivant le stade c) du procédé, une matière solide à gros grains ayant une granulométrie inférieure à 30 mm.

5. Procédé suivant les revendications 1 à 4, dans lequel on règle la quantité du gaz qui s'échappe qui est envoyé au séchage de la boue au stade c) du procédé, de manière que la boue séchée, suivant le stade a) du procédé, ait une teneur en eau de 10 à 20 % en poids.

6. Procédé suivant les revendications 1 à 5, dans lequel on sépare, suivant le stade e) du procédé, une matière solide ayant une granulométrie inférieure à 1 mm et une température de 100 à 200°C.
